# DEMANDE DE BREVET EUROPEEN

(11) **EP 1 712 429 A2**
(43) Date de publication de la demande: **18.10.2006**
(21) Numéro de dépôt: 06290586.4
(22) Date de dépôt: 11.04.2006
(51) Int. Cl.: B60R 21/045, B60R 13/02, B60K 37/00

(54) **Piéce d'équipement interieur pour véhicule automobile et son procédé de montage**

(30) Priorité: 12.04.2005 FR 0503653
(71) Demandeur: Faurecia Interieur Industrie, 92000 Nanterre (FR)
(72) Inventeur: Bergerioux, Jacques, 95810 Arronville (FR); Leserre, Dominique, 77450 Montry (FR); Beau, Godefroy, 92250 La Garenne Colombes (FR); Beaupere, Stéphane, 60540 Bornel (FR)
(74) Mandataire: Domenego, Bertrand

(57) **Abrégé**

La pièce (11) comprend une armature rigide (13) de support délimitant intérieurement un logement (15) qui débouche dans une surface d'aspect (26) de la pièce (11).

La pièce (11) comprend en outre un garnissage souple (17) qui obture au moins partiellement le logement (15) et qui comprend une région (19) de fixation à l'armature (13). La région de fixation (19) délimite extérieurement le garnissage (17). L'armature (13) comprend au moins une pince (47 ; 49) de fixation de la région de fixation (19). La pince (47 ; 49) comprend deux parois d'enserrement (27, 43 ; 29, 45) de la région de fixation (19).

Application aux planches de bord de véhicules automobiles.

## Description

La présente invention concerne une pièce d'équipement pour véhicule automobile, du type comprenant :
- une armature rigide de support délimitant intérieurement un logement débouchant dans une surface d'aspect de la pièce ; et
- un garnissage souple recouvrant au moins partiellement le logement et comprenant une région de fixation à l'armature.

On connaît de DE-A-198 12 828 une porte de véhicule automobile comprenant une armature rigide qui délimite un logement central et un garnissage souple qui recouvre partiellement le logement central.

Le garnissage souple comprend une région périphérique de fixation dans laquelle est ménagée une fente périphérique. Pour fixer le garnissage sur l'armature, la fente reçoit une partie de l'armature de forme complémentaire.

Une telle pièce ne donne pas entière satisfaction. En effet, le garnissage étant souple, sa fixation sur l'armature est peu robuste. Par ailleurs, l'aspect esthétique de la pièce obtenue n'est pas satisfaisant.

Un but de l'invention est donc d'obtenir une pièce d'équipement du type précité, dans lequel le garnissage souple est fixé de manière robuste et esthétique sur l'armature.

A cet effet, l'invention a pour objet une pièce d'équipement du type précité, caractérisée en ce que l'armature comprend au moins une pince de fixation de la région de fixation, la pince comprenant deux parois d'enserrement de la région de fixation.

La pièce selon l'invention peut comprendre une ou plusieurs des caractéristiques suivantes, prise(s) isolément ou selon toutes combinaisons techniquement possibles :
- la région de fixation est une région périphérique délimitant extérieurement le garnissage ;
- l'armature présente une surface extérieure, le garnissage souple comprenant une peau d'aspect et une pluralité de nervures d'appui sur la surface extérieure, et les parois d'enserrement font saillie vers la peau à partir de la surface extérieure ;
- au moins une des parois formant la pince affleure à côté du garnissage souple ;
- l'armature comprend au moins une paroi de liaison qui forme un épaulement délimitant le logement, une paroi d'enserrement de la pince étant formée par la paroi de liaison ;
- la région de fixation fait saillie dans le logement en regard de la paroi de liaison, une paroi d'enserrement de la pince étant formée par une partie de l'armature qui fait saillie dans le logement en regard de la paroi de liaison ;
- une paroi d'enserrement de la pince est mobile par rapport à l'autre paroi d'enserrement entre une position ouverte de mise en place du garnissage et une position fermée de fixation dans laquelle la région de fixation est enserrée entre les parois d'enserrement de la pince ;
- une paroi d'enserrement de la pince est mobile par rapport à l'autre paroi d'enserrement, à une température sensiblement constante ;
- la région de fixation comprend un bourrelet inférieur qui coopère avec une paroi d'enserrement de la pince dans la position fermée de fixation ;
- la paroi mobile est articulée sur une partie de fond du logement solidaire de la paroi fixe ;
- dans la position fermée de fixation, la paroi mobile est solidaire d'un fond rapporté sur la paroi fixe ;
- dans la position ouverte de mise en place du garnissage, la paroi mobile est solidaire du garnissage.

L'invention a en outre pour objet un procédé de montage d'une pièce d'équipement pour véhicule automobile telle que définie ci-dessus, caractérisé en ce qu'il comprend les étapes suivantes :
(a) disposition de la région de fixation du garnissage dans le logement, la paroi mobile de la pince étant dans sa position ouverte ; et
(b) déplacement de la paroi mobile de sa position ouverte à sa position fermée pour enserrer la région de fixation.

Le procédé selon l'invention peut comprendre la caractéristique suivante :
- le procédé comprend, avant l'étape (a), une étape d'engagement de la partie mobile dans le garnissage.

L'invention sera mieux comprise à la lecture de la description qui va suivre, donnée uniquement à titre d'exemple, et faite en se référant aux dessins annexés, sur lesquels :
- la Figure 1 est une vue schématique partielle et en perspective d'une partie d'une première planche de bord selon l'invention ;
- la Figure 2 est une vue schématique du garnissage de la planche de bord de la Figure 1 ;
- la Figure 3 est une section schématique et agrandie prise suivant le plan III-III de la Figure 1 ;
- la Figure 4 est une vue agrandie d'un détail de la Figure 3 pour une deuxième planche de bord selon l'invention ;
- la Figure 5 est une vue analogue à la Figure 4 lors du montage de la deuxième planche selon l'invention ;
- la Figure 6 est une vue analogue à la Figure 4 pour une troisième planche de bord selon l'invention ;
- la Figure 7 est une vue analogue à la Figure 5 pour la troisième planche selon l'invention ;
- la Figure 8 est une vue analogue à la Figure 4 pour une quatrième planche de bord selon l'invention ;
- la Figure 9 est une vue analogue à la Figure 5 pour la quatrième planche selon l'invention ;
- la Figure 10 est une vue analogue à la Figure 4 pour une cinquième planche de bord selon l'invention ; et
- la Figure 11 est une vue analogue à la Figure 5 pour la cinquième planche selon l'invention.

Dans tout ce qui suit, les orientations utilisées sont les orientations habituelles d'un véhicule automobile. Ainsi, les termes « supérieur », « inférieur », « avant », « arrière », s'entendent par rapport au sens de marche du véhicule automobile et à la position d'un conducteur.

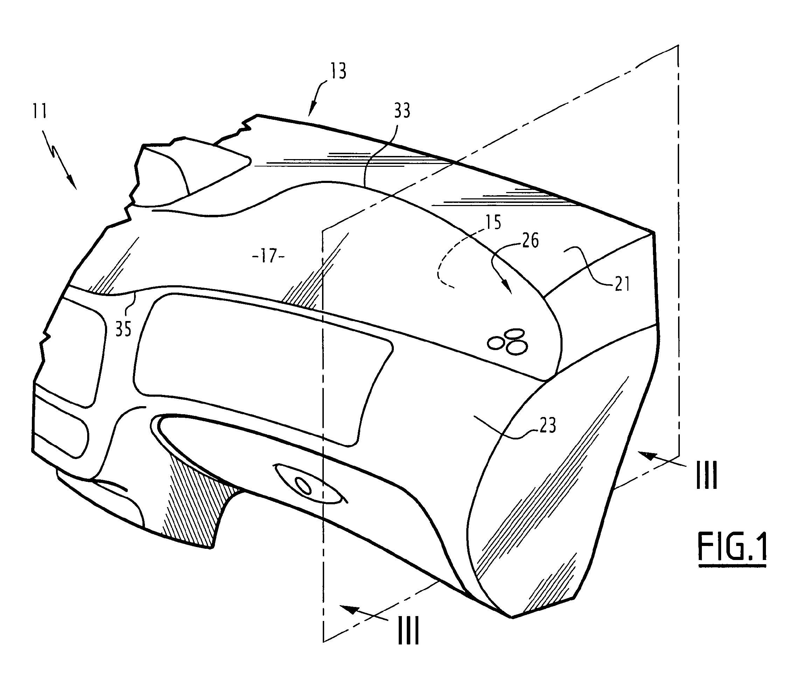

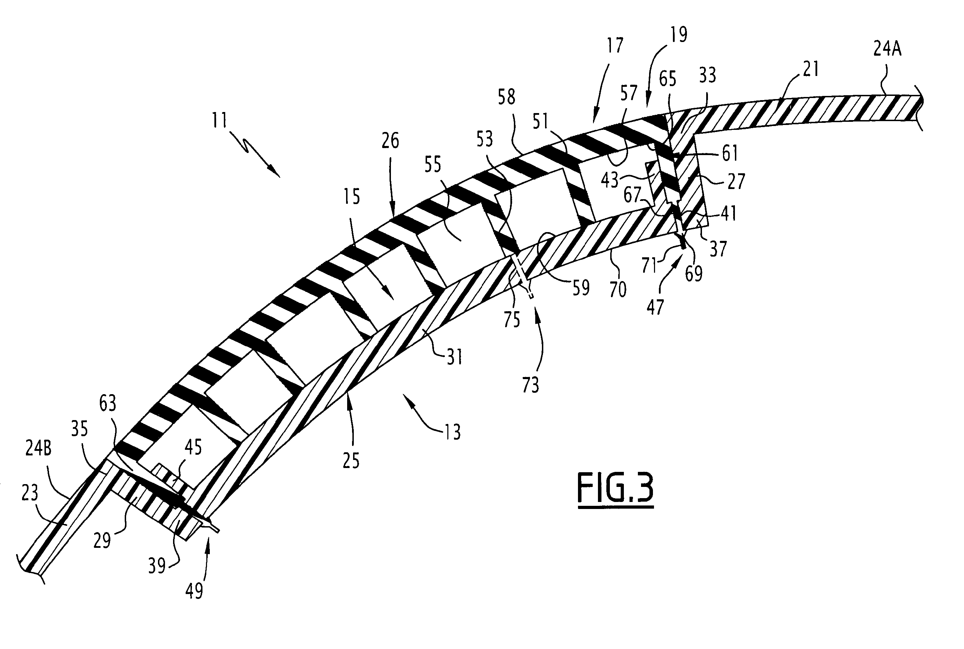

Les Figures 1 à 3 décrivent une première planche de bord 11 selon l'invention. Comme illustré par la Figure 3, cette planche 11 comprend une armature 13 rigide de support qui délimite intérieurement un logement 15, et un garnissage souple 17 comprenant une région périphérique 19 de fixation à l'armature 13. Dans cet exemple, le garnissage souple 17 obture totalement le logement 15.

L'armature de support 13, parfois dénommée insert, est fixée de manière classique à la caisse (non représentée) du véhicule automobile. Elle est réalisée par exemple en matière thermoplastique polyoléfinique, homopolymère ou copolymère, comprenant éventuellement des charges minérales ou un renforcement par des fibres de verre. Elle peut réalisée en ABS-PC (acrylonitrile butadiène styrène et polycarbonate) éventuellement renforcée par des fibres de verre. Ces matériaux ont une rigidité permettant de remplir une fonction de support.

Comme illustré par la Figure 3, l'armature 13 comprend une paroi supérieure 21 et une paroi inférieure 23, reliées entre elles par une région creuse 25 délimitant le logement 15.

Les parois supérieure et inférieure 21 et 23 sont galbées. Chaque paroi 21, 23 présente une surface extérieure 24A, 24B qui délimite partiellement une surface d'aspect 26 de la planche de bord 11 destinée à être placée en regard d'un occupant du véhicule.

La région creuse 25 comprend des parois avant et arrière 27 et 29 de liaison au garnissage, et un fond 31 qui relie les parois 27 et 29.

Les parois de liaison 27 et 29 s'étendent vers le bas sensiblement perpendiculairement aux parois supérieure et inférieure 21 et 23 respectives.

Les parois 27 et 29 définissent respectivement avec les parois supérieure et inférieure 21 et 23 un épaulement avant 33 et un épaulement arrière 35 qui s'étendent transversalement en regard l'un de l'autre, comme illustré par la Figure 1.

Le fond 31 s'étend entre les bords inférieurs 37 et 39 des parois de liaison 27 et 29, parallèlement à la surface d'aspect 26 de la planche de bord 11.

Des passages traversants de fixation 41 de la région périphérique 19 sont ménagés dans le fond 31, au voisinage respectivement des parois de liaison 27 et 29. Ces passages 41 s'étendent sensiblement transversalement le long des parois de liaison 27, 29.

La région creuse 25 comprend des parois 43 et 45 d'enserrement du garnissage qui font saillie vers le haut à partir du fond 31. Chaque paroi d'enserrement 43, 45 s'étend transversalement en regard d'une paroi de liaison 27, 29 associée, parallèlement à cette paroi de liaison 27, 29, sur sensiblement toute la longueur de cette paroi.

Par ailleurs, la hauteur de chaque paroi 43, 45, prise perpendiculairement à la surface d'aspect est inférieure à la hauteur de la paroi de liaison 27, 29 en regard.

Chaque paroi d'enserrement 43, 45 forme avec sa paroi de liaison 27, 29 en regard une pince de fixation 47, 49 de la région de fixation 19 du garnissage, comme on va le décrire plus bas. Les passages 41 débouchent dans les pinces 47, 49.

Le garnissage souple 17 comprend une peau extérieure d'habillage 51 prolongée vers le bas par un réseau de nervures d'appui 53 délimitant entre elles des alvéoles 55.

Le garnissage 17 et donc la peau 51 et les nervures 53 sont formés d'une seule pièce en matière plastique, par exemple en thermoplastique élastomère tel que du thermoplastique polyuréthane (TPU), du thermoplastique polyoléfine (TPO). On peut également utiliser du polychlorure de vinyle souple (PVC) ou du caoutchouc tel que du silicone.

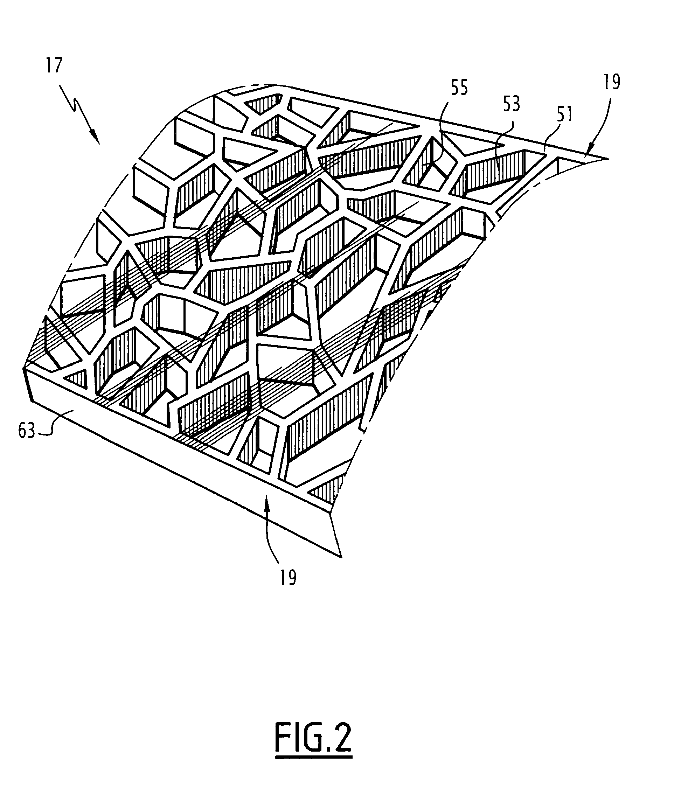

Le garnissage 17 est notablement plus souple que l'armature 13. La matière souple utilisée pour former le garnissage 17 des Figures 1 à 3 est par exemple translucide comme cela est représenté sur la Figure 2.

Ainsi, un observateur peut distinguer les nervures 53 depuis l'extérieur de la planche de bord 11 au travers de la peau 51. Pour faciliter la représentation, le garnissage 17 a en revanche été représenté opaque sur les autres Figures.

Les nervures 53 s'étendent depuis une surface inférieure 57 de la peau 51 jusqu'à une surface supérieure 59 du fond 31 sur laquelle elle s'appuie. On notera que, dans cet exemple, les nervures 53 sont sensiblement orthogonales aux surfaces directrices du fond 31 et de la peau 17.

Le garnissage 17 étant réalisé en une matière souple et des alvéoles 55 étant délimitées entre les nervures 53, le garnissage 17 peut se déformer au toucher.

Cette déformation peut résulter d'un flambage des nervures 53 situé au voisinage du point d'application d'une force de poussée et d'une flexion de la ou des régions de peau 51 situées entre ces nervures 53. Les nervures 53 et les alvéoles 55 confèrent ainsi sa souplesse et son épaisseur au garnissage 17 de sorte qu'un confort satisfaisant est obtenu.

Une surface supérieure 58 de la peau 51 située à l'opposé de la surface inférieure 57 délimite une partie de la surface d'aspect 26 de la planche de bord 11 qui s'étend entre les surfaces extérieures 24A, 24B des parois supérieure et inférieure 21 et 23.

La surface supérieure 58 de la peau 51 affleure chaque surface extérieure 24A, 24B, en regard des parois de liaison 27, 29. La surface d'aspect 26 de la planche de bord est donc continue le long des épaulements avant et arrière 33 et 35.

La région périphérique 19 comprend une nervure de fixation avant 61 et une nervure de fixation arrière 63 disposées respectivement dans les pinces de fixation 47 et 49.

Chaque nervure de fixation 61, 63 fait saillie vers le bas dans le logement 15 par rapport à la peau 51, perpendiculairement à la surface directrice de la peau 51. Les nervures 61, 63 s'étendent par ailleurs transversalement sur sensiblement toute la longueur des parois de liaison 27, 29 respectives.

Les nervures de fixation 61, 63 délimitent extérieurement le garnissage, de sorte qu'en section verticale, aucune partie de la peau 51 ne s'étend au-delà des nervures 61, 63.

Les nervures 61, 63 sont de structures analogues de sorte qu'on ne décrira que la nervure 61 dans ce qui suit.

La nervure 61 comprend, de haut en bas, une partie supérieure 65 disposée dans la pince de fixation associée 47, une partie intermédiaire 67 amincie disposée dans le passage de fixation 41 au fond de la pince 47, et une partie inférieure 69 de fixation conique en appui sur une surface inférieure 70 du fond 31.

La partie supérieure 65 s'étend entre la paroi de liaison 27 et la paroi d'enserrement 43 en regard, le long de la paroi de liaison 27. Au repos, lorsque le garnissage 17 est disposé à l'écart de l'armature 13, l'épaisseur de la partie supérieure 65 est légèrement supérieure à la distance qui sépare la paroi d'enserrement 43 de la paroi de liaison 27. Ainsi, lorsque la nervure 61 est insérée dans la pince 47, la partie supérieure 65 est enserrée entre les parois 27 et 43 pour assurer un blocage continu du garnissage 17 le long de la paroi 27.

L'épaisseur de la partie intermédiaire 67 est inférieure à l'épaisseur de la partie supérieure 65. La partie intermédiaire 61 présente par ailleurs des dimensions sensiblement conjuguées à celles du passage 41.

La partie inférieure 69 est de forme sensiblement conique, convergeant vers le bas. La largeur d'une base du cône délimitant la partie 69 est supérieure à la largeur du passage 41.

Par ailleurs, une languette 71 de traction prolonge la partie inférieure 69 vers le bas à partir du sommet du cône.

Pour monter le garnissage 17 dans le logement 15, la nervure de fixation 61 est introduite de haut en bas dans sa pince de fixation 47 associée. La languette de fixation 71 est introduite dans le passage 41.

Puis, la languette 71 est tirée vers le bas, et la partie inférieure 69 est introduite à force dans le passage 41 par compression. Lors de la traction sur la languette 71, l'épaisseur de la partie supérieure 65 se réduit et la partie supérieure 65 entre à force dans la pince de fixation 47.

Dans une variante représentée en pointillés sur la Figure 3, des nervures 73 de fixation intermédiaires, de structures analogues aux nervures de fixation 61, 63 de la région périphérique sont prévues dans une région centrale du garnissage 17. Ces nervures 73 sont insérées dans des passages de fixation secondaires 75 ménagés dans le fond 31.

En variante (non représentée), la nervure de fixation intermédiaire 73 est également enserrée dans une pince de fixation formée par deux parois d'enserrement en saillie vers l'extérieur par rapport au fond du logement. Une telle nervure assure une fixation efficace du garnissage sur l'armature dans les régions anguleuses du l'armature.

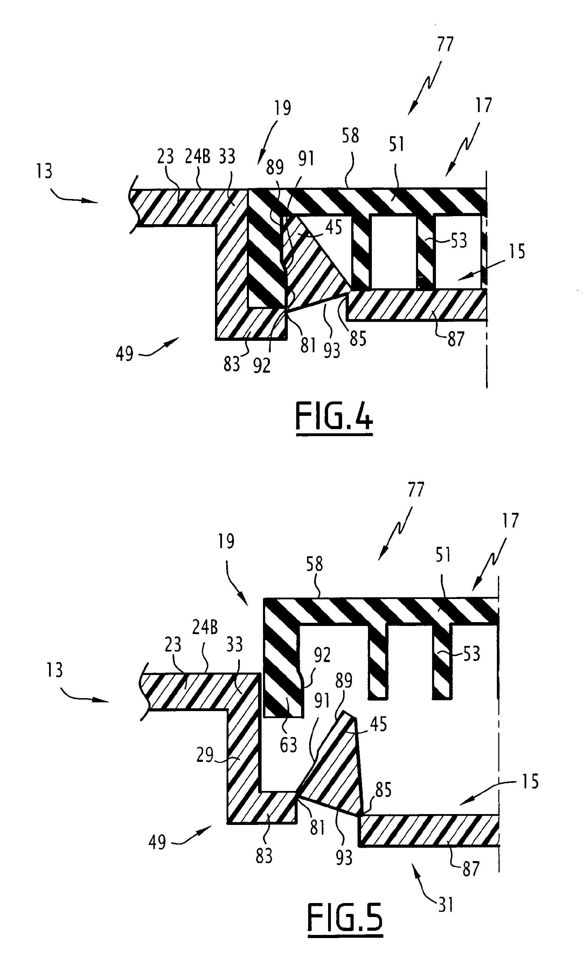

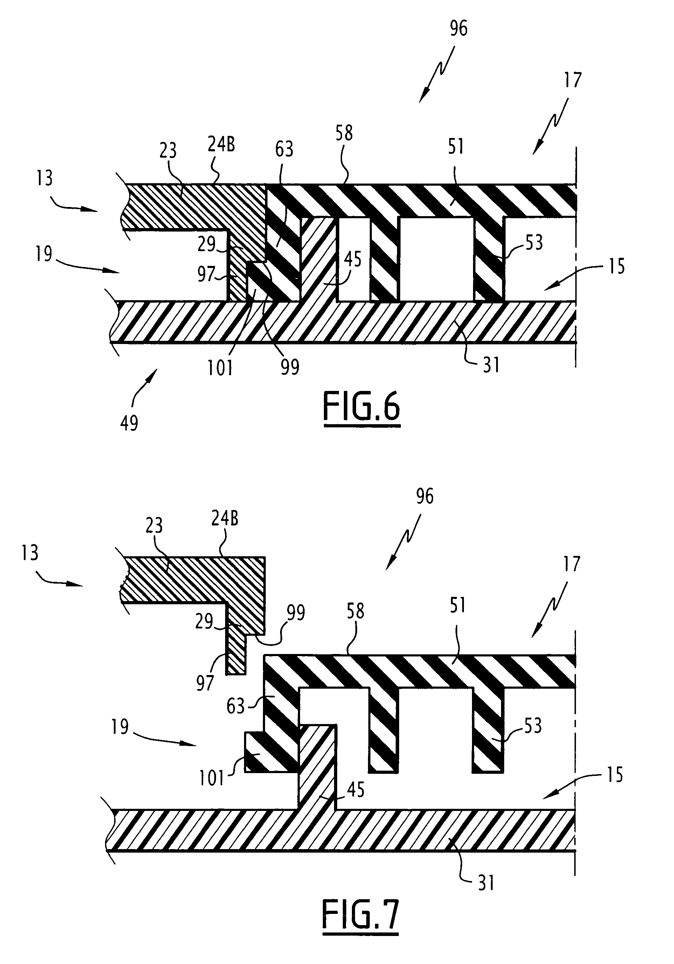

La deuxième planche de bord 77 selon l'invention représentée partiellement sur les Figures 4 et 5 diffère de la première planche 11 en ce que les parois d'enserrement 43, 45 sont mobiles respectivement par rapport aux parois de liaison 27, 29 en regard, entre une position ouverte d'insertion du garnissage représentée sur la Figure 5, et une position fermée de fixation du garnissage représentée sur la Figure 4. Les parois d'enserrement 43, 45 sont mobiles respectivement par rapport aux parois de liaison 27, 29 en regard à une température sensiblement constante.

Seule la pince de fixation arrière 49 est représentée sur les Figures 4 et 5. Dans ce qui suit, on décrira uniquement cette pince 49, la pince de fixation avant 47 étant de structure analogue. De même, on décrira uniquement la nervure de fixation arrière 63, la nervure de fixation avant 61 étant de structure analogue.

Comme illustré par la Figure 4, la paroi d'enserrement 45 est articulée le long d'un bord inférieur arrière 81 à une partie périphérique 83 du fond 31 solidaire de la paroi de liaison 29.

Par ailleurs, la paroi 45 d'enserrement est articulée par un bord inférieur avant 85 à une partie centrale 87 du fond 31 mobile par rapport à la partie périphérique 83 entre une position inférieure représentée sur la Figure 5, dans laquelle la partie centrale 87 est située sous la partie périphérique 83 et une position supérieure représentée sur la Figure 4, dans laquelle la partie centrale 87 est située au-dessus de la partie périphérique 83.

Des articulations entre la paroi 45 d'enserrement et les parties périphériques 83 et 87 du fond 31 sont par exemple réalisées par des charnières plastiques qui s'étendent transversalement le long de la paroi de liaison 29.

Par ailleurs, une surface d'enserrement 89 de la paroi mobile 45, située en regard de la paroi de liaison 29 délimite une région creuse 91 adjacente au bord inférieur 81.

Dans la deuxième planche de bord 77, la nervure de fixation 63 est dépourvue de partie intermédiaire amincie et de partie inférieure conique.

La nervure de fixation 63 comprend, à son extrémité inférieure un bourrelet 92 qui fait saillie vers l'intérieur du logement 15.

Dans la position ouverte d'insertion du garnissage 17, représentée sur la Figure 5, la surface 89 est disposée à l'écart de la paroi de liaison 29 et délimite avec cette paroi 29 une cavité s'ouvrant vers le haut de manière divergente.

Dans cette position d'insertion, le bord inférieur avant 85 est situé au-dessous du bord inférieur arrière 81.

Par ailleurs dans cette position, la région creuse 91 ne forme pas de partie en contre-dépouille de sorte que son démoulage est facilité lorsque l'armature 12 est réalisée d'un seul tenant par injection.

Dans la position fermée de fixation du garnissage 17, la surface 89 s'étend sensiblement parallèlement à la paroi de liaison 29. Dans cette position, la partie centrale 87 du fond 31 est dans sa position supérieure.

Par ailleurs, la région creuse 91 forme une partie en contre-dépouille qui coopère avec le bourrelet intérieur 92 à l'extrémité inférieure de la nervure de fixation 63.

La distance qui sépare le bord inférieur arrière 81 du bord inférieur avant 85, prise le long d'une surface inférieure 93 de la paroi d'enserrement 45 est inférieure à la distance qui sépare la partie périphérique 83 de la partie centrale 87 du fond 31, prise perpendiculairement à la paroi 29. Ainsi, les positions d'insertion et de fixation forment des positions stables de la pince de fixation 49, alors que les positions intermédiaires entre ces deux positions sont instables.

Pour réaliser la deuxième planche 77 selon l'invention, la pince de fixation 49 est tout d'abord placée dans sa position ouverte d'insertion du garnissage 17 représentée sur la Figure 5. La partie centrale 87 du fond 31 est alors dans sa position inférieure.

Le garnissage 17 est ensuite amené dans le logement 15. La nervure de fixation 63 est posée sur la partie périphérique 83 du fond 31, entre la paroi de liaison 29 et la paroi d'enserrement 49. La partie mobile 87 du fond 31 est alors poussée vers le haut pour la passer dans sa position supérieure.

Lors de ce déplacement, la paroi d'enserrement 45 se déplace vers la paroi de liaison 29 jusqu'à ce que la pince 49 atteigne sa position fermée de fixation. La surface d'enserrement 89 plaque la nervure de fixation 63 contre la paroi de liaison 29. Le bourrelet intérieur 92 est reçu dans la région creuse 91.

Le garnissage 17 est alors solidement fixé dans le logement 19. Par ailleurs la surface extérieure 58 du garnissage 17 affleure les surfaces extérieures 24A et 24B des parois supérieure et inférieure 21 et 23.

La troisième planche de bord selon l'invention 96 représentée sur les Figures 6 et 7 diffère de la première planche de bord 11 en ce que le fond 31 est rapporté sur l'extrémité inférieure 39 de la paroi de liaison 29 par encliquetage ou soudage. Seules la pince de fixation arrière 49 et la nervure de fixation 63 associée sont représentées sur ces Figures.

Le bord inférieur 39 de la paroi de liaison 29 délimite intérieurement vers le logement 15 un évidement de fixation de la nervure de fixation 63.

Par ailleurs, la nervure 63 est dépourvue de partie intermédiaire et de partie inférieure. Elle comprend à son extrémité inférieure un bourrelet 101 dirigé vers l'extérieur du logement 15.

Le fond 31 et la paroi d'enserrement 45 sont mobiles par rapport à la paroi de liaison 29, entre une position ouverte d'insertion du garnissage 17 représentée sur la Figure 7, dans laquelle le fond 31 est disposé à l'écart de la paroi de liaison 27, et une position fermée de fixation du garnissage 17, dans laquelle le fond 31 est rapporté sur la paroi de liaison 27. Dans la position de fixation, le bourrelet 101 est reçu dans l'évidement 99. Par ailleurs, la nervure 63 est enserrée entre la paroi de liaison 29 et la paroi d'enserrement 45.

Pour monter la troisième planche de bord 96, le garnissage 17 est disposé sur le fond 31. La nervure de fixation 63 est appliquée contre la paroi d'enserrement 45 à l'extérieur de cette paroi 45.

Par ailleurs, la nervure 63 est posée sur le fond 31, à l'extérieur de la paroi 45.

Puis, le garnissage 17 et le fond 31 sont déplacés vers la paroi de liaison 27. La nervure 63 est alors enserrée entre la paroi de liaison 29 et la paroi d'enserrement 45. Lors ce déplacement, le bourrelet extérieur 101 est reçu dans l'évidement 99 pour empêcher le détachement du garnissage 17 le long d'un axe perpendiculaire à la surface d'aspect de la peau.

Le fond 31 est alors fixé par soudure ou encliquetage sur la paroi 29.

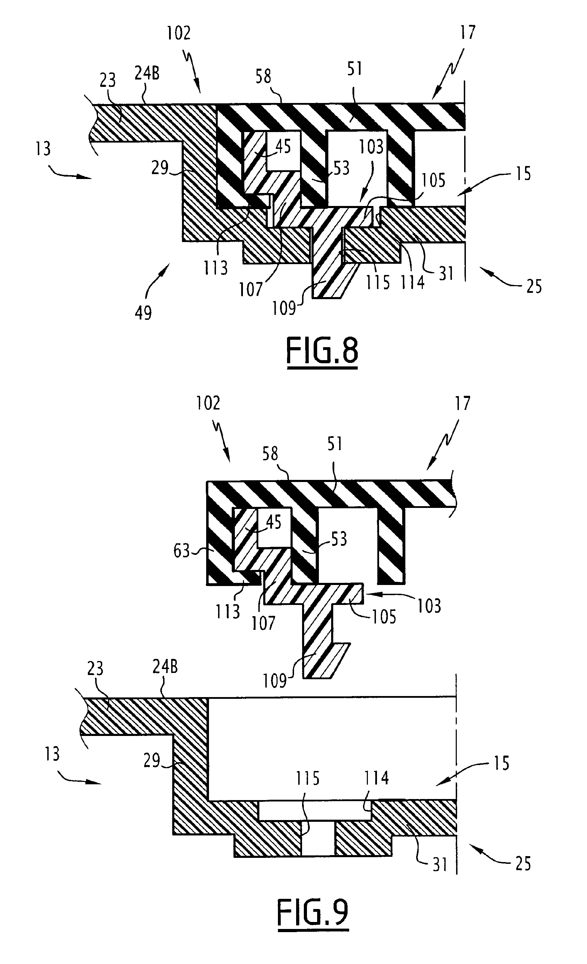

La quatrième planche de bord 102, représentée sur les Figures 8 et 9 diffère de la première planche de bord 11 en ce que la paroi d'enserrement 45 est solidaire d'un support 103 encliquetable dans le fond 31 de la région creuse 25.

Le support 103 présente une base 105 sensiblement plane et une région extérieure 107 en forme de gradin à l'extrémité de laquelle la paroi 45 fait saillie vers le haut.

Une patte d'encliquetage 109 fait saillie vers le bas à partir de la base 105.

Le support 103 et la paroi d'enserrement 45 sont donc mobiles par rapport à la paroi de liaison 29 entre une position ouverte d'insertion du garnissage dans laquelle ils sont disposés à l'écart du fond 31, et une position fermée de liaison dans laquelle ils sont fixés dans le fond 31.

Par ailleurs, la nervure de fixation 63 comprend, à son extrémité inférieure, un bourrelet intérieur 113 qui fait saillie vers l'intérieur du logement 15.

Le fond 31 délimite une cavité 114 de réception de la base 105. Un passage 115 d'encliquetage traversant débouche dans la cavité 114.

Lors du montage de la planche de bord 102, le support 103 et la paroi d'enserrement 45 sont initialement dans la position ouverte. La paroi 45 est insérée dans la région en contre-dépouille définie par la nervure de fixation 63 et le bourrelet 113. Le bourrelet 113 est alors engagé sous le gradin 107. Par ailleurs, la nervure d'appui 53 adjacente à la nervure de fixation 63 est calée au-dessus du gradin 107.

Puis, pour faire passer la paroi 45 dans sa position fermée, la patte 109 est insérée dans l'ouverture d'encliquetage 115 et la base 105 est reçue dans la cavité 114. Dans cette position fermée, la nervure de fixation 63 est enserrée entre la paroi d'enserrement 45 et la paroi de liaison 27. Par ailleurs, le bourrelet 113 est calé entre le gradin 107 et le fond 31.

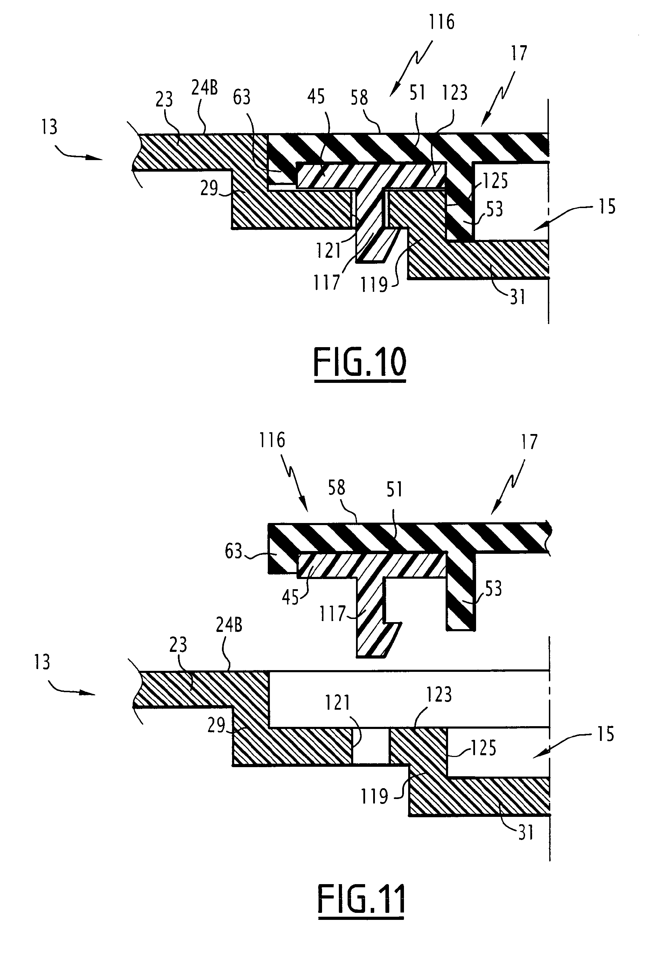

La cinquième planche de bord 116, représentée sur les Figures 10 et 11 diffère de la première planche de bord 11 en ce que la paroi d'enserrement 45 rigide est fixée sur le garnissage 17 entre la nervure de fixation 63 et la nervure d'appui 53 adjacente, avant l'insertion du garnissage 17 dans le logement 15. La hauteur de la nervure de fixation 63 est inférieure à la hauteur de la nervure d'appui 53.

Par ailleurs, la paroi d'enserrement 45 comprend une patte 117 d'encliquetage qui fait saillie vers le bas.

La paroi d'enserrement 45 est réalisée par exemple par surmoulage par injection sur le garnissage 17.

Le fond 31 délimite un gradin périphérique 119 au voisinage de la paroi de liaison 29. Ce gradin 119 délimite une ouverture traversante 121 qui débouche dans sa surface supérieure 123.

La paroi d'enserrement 25 est mobile par rapport à la paroi de liaison 29 entre une position ouverte d'insertion du garnissage à l'écart du fond 31 et une position fermée de liaison, dans laquelle elle est fixée dans le fond 31.

Pour monter la cinquième planche de bord 116 selon l'invention, la paroi d'enserrement 45 solidaire du garnissage 17 est initialement disposée dans sa position ouverte à l'écart de la paroi de liaison 29 et du fond 31.

Puis, la patte d'encliquetage 117 est insérée dans le passage 121 correspondant. La paroi d'enserrement 45 est posée sur la surface supérieure 123 du gradin 119, perpendiculaire à la paroi de liaison 29. La nervure 63 est alors enserrée entre la paroi de liaison 29 et la paroi d'enserrement 45. Par ailleurs, la nervure d'appui 53 adjacente est calée contre une surface latérale 125 du gradin 119 perpendiculaire à la surface supérieure 123.

Grâce à l'invention qui vient d'être décrite, il est possible de disposer d'une pièce d'équipement de véhicule automobile comprenant une armature rigide 13 et un garnissage souple 17 reçu dans un logement 15 délimité par l'armature 13, dans laquelle la fixation du garnissage 17 sur l'armature 13 est robuste, et préserve l'aspect esthétique de la pièce obtenue après fixation.

La présence dans l'armature 13 d'une pince de fixation 47, 49 de la région périphérique 19 du garnissage 17 assure un contact continu entre le garnissage 17 et l'armature 13 sur la surface d'aspect 26 de la pièce disposée en regard d'un occupant du véhicule, ce qui améliore l'aspect esthétique de la pièce.

Le montage du garnissage 17 sur l'armature 13 est facilité lorsque la pince de fixation 47, 49 comprend deux parois mobiles l'une par rapport à l'autre entre une position ouverte de mise en place du garnissage 17 et une position fermée de fixation.

## Revendications

1. Pièce d'équipement (11 ; 77 ; 96 ; 102 ; 116) pour véhicule automobile, du type comprenant :
- une armature (13) rigide de support délimitant intérieurement un logement (15) débouchant dans une surface d'aspect (26) de la pièce (11 ; 77 ; 96 ; 102 ; 116); et
- un garnissage souple (17) recouvrant au moins partiellement le logement (15) et comprenant une région (19) de fixation à l'armature (13) ;
**caractérisée en ce que** l'armature (13) comprend au moins une pince (47 ; 49) de fixation de la région de fixation (19), la pince comprenant deux parois d'enserrement (27, 43 ; 29, 45) de la région de fixation (19).

2. Pièce (11 ; 77 ; 96 ; 102 ; 116) selon la revendication 1, **caractérisée en ce que** la région de fixation est une région périphérique (19) délimitant extérieurement le garnissage (17).

3. Pièce selon l'une des revendications 1 ou 2, **caractérisée en ce que** l'armature (13) présente une surface extérieure (59), le garnissage souple (17) comprenant une peau d'aspect (51) et une pluralité de nervures d'appui (53) sur la surface extérieure (59), et **en ce que** les parois d'enserrement (27, 43 ; 29, 45) font saillie vers la peau (51) à partir de la surface extérieure (59).

4. Pièce (11 ; 77 ; 96 ; 102 ; 116) selon l'une quelconque des revendications 1 à 3, **caractérisée en ce qu'**au moins une des parois (27 ; 29) formant la pince (47 ; 49) affleure à côté du garnissage souple (17).

5. Pièce (11 ; 77 ; 96 ; 102 ; 116) selon l'une quelconque des revendications précédentes, **caractérisée en ce que** l'armature (13) comprend au moins une paroi de liaison (27 ; 29) qui forme un épaulement (33 ; 35) délimitant le logement (15), une paroi d'enserrement de la pince (47 ; 49) étant formée par la paroi de liaison (27 ; 29).

6. Pièce (11 ; 77 ; 96 ; 102 ; 116) selon la revendication 5, **caractérisée en ce que** la région de fixation (19) fait saillie dans le logement (15) en regard de la paroi de liaison (27 ; 29), une paroi d'enserrement de la pince (47 ; 49) étant formée par une partie (43 ; 45) de l'armature (13) qui fait saillie dans le logement (15) en regard de la paroi de liaison (27 ; 29).

7. Pièce (77 ; 96 ; 102 ; 116) selon l'une quelconque des revendications précédentes, **caractérisée en ce qu'**une paroi d'enserrement (45) de la pince (49) est mobile par rapport à l'autre paroi d'enserrement (29) entre une position ouverte de mise en place du garnissage (17) et une position fermée de fixation dans laquelle la région de fixation (19) est enserrée entre les parois d'enserrement (29 ; 45) de la pince (49).

8. Pièce (77 ; 96 ; 102 ; 116) selon la revendication 7, **caractérisée en ce** en ce qu'une paroi d'enserrement (45) de la pince (49) est mobile par rapport à l'autre paroi d'enserrement (29), à une température sensiblement constante.

9. Pièce (77 ; 96 ; 102) selon l'une des revendication 7 ou 8, **caractérisée en ce que** la région de fixation (19) comprend un bourrelet inférieur (92 ; 101 ; 113) qui coopère avec une paroi d'enserrement (29, 45) de la pince (49) dans la position fermée de fixation.

10. Pièce (77) selon l'une quelconque des revendications 7 à 9, **caractérisée en ce que** la paroi mobile (45) est articulée sur une partie (83) de fond du logement (15) solidaire de la paroi fixe (29).

11. Pièce (96 ; 102 ; 116) selon l'une quelconque des revendications 7 à 9, **caractérisée en ce que** dans la position fermée de fixation, la paroi mobile (45) est solidaire d'un fond (31) rapporté sur la paroi fixe (29).

12. Pièce (116) selon la revendication 11, **caractérisée en ce que**, dans la position ouverte de mise en place du garnissage (17), la paroi mobile (45) est solidaire du garnissage (17).

13. Procédé de montage d'une pièce d'équipement (77 ; 96; 102; 116) pour véhicule automobile selon l'une quelconque des revendications 7 à 12, **caractérisé en ce qu'**il comprend les étapes suivantes :
(a) disposition de la région de fixation (19) du garnissage (17) dans le logement (15), la paroi mobile (45) de la pince (49) étant dans sa position ouverte ; et
(b) déplacement de la paroi mobile (45) de sa position ouverte à sa position fermée pour enserrer la région de fixation (19).

14. Procédé selon la revendication 13, **caractérisé en ce qu'**il comprend, avant l'étape (a), une étape d'engagement de la partie mobile (45) dans le garnissage (17).
